# EUROPÄISCHE PATENTSCHRIFT

(11) **EP 1 561 546 B1**
(45) Veröffentlichungstag und Bekanntmachung des Hinweises auf die Patenterteilung: **24.01.2007**
(21) Anmeldenummer: 05001979.3
(22) Anmeldetag: 01.02.2005
(51) Int. Cl.: B25B 5/08, B25B 5/12

(54) **Spannvorrichtung**
Clamping device
Dispositif de serrage

(30) Priorität: 05.02.2004 DE 202004001771 U
(43) Veröffentlichungstag der Anmeldung: 10.08.2005
(73) Patentinhaber: DE-STA-CO Europe GmbH, 61440 Oberursel (DE)
(72) Erfinder: Marschall, Michael, 71543 Wüstenrot-Neulautern (DE)
(74) Vertreter: Wolf, Günter

(56) Entgegenhaltungen:
- EP-A- 1 125 674
- EP-A- 1 386 697
- EP-A- 1 498 223
- DE-U1- 20 100 701
- US-A- 6 102 383
- US-B1- 6 199 873

## Beschreibung

Die vorliegende Erfindung betrifft eine Spannvorrichtung, insbesondere Unterbau-Spannvorrichtung, zum lösbaren Fixieren von Bauteilen, insbesondere während eines Bearbeitungsvorgangs, gemäß dem Oberbegriff des Patentanspruchs 1 bzw. 2, die aus der Druckschrift DE 20100701 U bekannt ist.

Derartige Spannvorrichtungen werden insbesondere im Automobilbau eingesetzt. Mit einer derartigen Spannvorrichtung werden beispielsweise Karosseriebauteile in klar definierten Positionen an einer Unterkonstruktion verspannt, die anschließend von Robotern oder manuell zu bearbeiten sind.

Es sind Spannvorrichtungen bekannt, die von außen her das Bauteil spannend umgreifen. Bei größeren Bauteilen reicht eine Randfixierung in vielen Fällen nicht aus. Daher muss eine Fixierung im inneren Bereich des Bauteils vorgenommen werden. Von außen umgreifende Spannvorrichtungen einzusetzen ist hierbei nicht möglich, da der vorhandene Arbeitsraum für die Roboter oder Schweißzangen freigehalten werden muss. Für derartige Fälle werden sogenannte Unterbau-Spannvorrichtungen eingesetzt, die von unten her durch eine Ausnehmung im Bauteil eingeführt und mittels der Spanneinheit verspannt werden.

Es sind Unterbau-Spannvorrichtungen bekannt, die eine hakenförmige Spanneinheit aufweisen, die translatorisch mittels pneumatischer Aggregate von oben nach unten und umgekehrt bewegt werden kann. Nachteilig ist hier, dass die Spannstelle selbst relativ nahe an der Ausnehmung des Bauteils liegt, was zu Ungenauigkeiten führen kann, da die Ausnehmungen im Bauteil in der Regel durch Lochstanzung hergestellt werden und daher im Lochbereich Querschnittsverformungen vorhanden sein können. Darüber hinaus ist die bekannte Spannvorrichtung nach oben offen, so dass Schmutz, der beispielsweise während des Bearbeitungsvorgangs anfallen kann, in das Innere der Spannvorrichtung gelangt und eine dauerhaft zuverlässige Funktion gefährdet.

Des Weiteren sind Unterbau-Spannvorrichtungen bekannt, bei denen die hakenförmige Spanneinheit um einen Drehpunkt drehbar ausgefahren wird, was erfordert, dass die im Bauteil vorzusehene Ausnehmung relativ groß sein muss, damit die Spanneinheit zum Verspannen durch die Ausnehmung hindurchgeführt werden kann.

Ausgehend von dem genannten Stand der Technik liegt der vorliegenden Erfindung das technische Problem beziehungsweise die Aufgabe zugrunde, eine Spannvorrichtung der eingangs genannten Art anzugeben, die die im Stand der Technik genannten Nachteile vermeidet, wirtschaftlich hergestellt und eingesetzt werden kann, eine zuverlässige Fixierung während des Bearbeitungsvorgangs gewährleistet, einen kompakten Aufbau besitzt, hohe Spannkräfte ermöglicht, variable Spannentfernungen erzielt und eine dauerhaft zuverlässige Funktion gewährleistet.

Die erfindungsgemäße Spannvorrichtung ist durch die Merkmale des unabhängigen Patentanspruchs 1 bzw. des unabhängigen Anspruchs 2 gegeben. Vorteilhafte Ausgestaltungen und Weiterbildungen sind Gegenstand der von den unabhängigen Patentanspruchen 1 und 2 direkt oder indirekt abhängigen Patentansprüche.

Die erfindungsgemäße Spannvorrichtung zeichnet sich demgemäß dadurch aus, dass eine über die Gehäuseeinheit überstehende Pineinheit vorhanden ist, die in eine Ausnehmung des zu fixierenden Bauteils einführbar ist, die Pineinheit einen zum Inneren der Gehäuseeinheit und nach außen offene Öffnung, insbesondere Schlitz, aufweist, durch den hindurch die Spanneinheit bewegbar ist, und Mittel zum Führen der Bewegung der Spanneinheit vorhanden sind, die beim Bewegungsvorgang der Spanneinheit eine Kombination einer Translations- und Rotationsbewegung umsetzen, wodurch die Spanneinheit durch die Öffnung der Pineinheit geführt wird.

Dadurch, dass eine kombinierte Translations- und Ro-tationsbewegung der Spanneinheit durchgeführt wird, ist es möglich, die Spanneinheit allein durch den in der Pineinheit vorhandenen Schlitz hindurchzuführen, wobei gleichzeitig ein Verspannen des Bauteils in deutlichem Abstand zur Ausnehmung möglich ist. Die Lage der Spannstelle zur Pineinheit ist praktisch frei wählbar.

Die erfindungsgemäße Spannvorrichtung zeichnet sich dadurch aus, dass die Mittel zum Führen als Kulissenführung ausgebildet sind.

Eine konstruktiv besonders einfach und eine dauerhaft zuverlässige Funktion gewährleistende weitere vorteilhafte Ausgestaltung zeichnet sich dadurch aus, dass die Spanneinheit an einen Führungsschlitten angeschlossen ist, der zwei beabstandet angeordnete Führungszapfen oder -rollen aufweist, in/an der Gehäuseeinheit zumindest ein Kulissenelement angeordnet ist, das eine erste Führungsnut und eine beabstandet zur ersten Führungsnut angeordnete zweite Führungsnut aufweist, je ein Führungszapfen in die erste beziehungsweise zweite Führungsnut eingreift und die erste Führungsnut geradlinig verläuft oder eine leichte Krümmung aufweist und die zweite Führungsnut einen von der ersten Führungsnut aus gesehen konvex gekrümmten Verlauf aufweist, insbesondere derart, dass der Führungsschlitten und damit die Spanneinheit neben einer Translationsbewegung in Richtung der ersten Führungsnut eine Rotationsbewegung, insbesondere um zirka 90° (Altgrad), durchführt.

Eine alternative Ausgestaltung, die mit nur einer Nut auskommt, zeichnet sich dadurch aus, dass die Spanneinheit an einen Führungsschlitten angeschlossen ist, der einem Führungszapfen beziehungsweise -rolle aufweist, in/an der Gehäuseeinheit zumindest ein Kulissenelement angeordnet ist, das eine erste Führungsnut aufweist, der Führungszapfen in die erste Führungsnut eingreift, die erste Führungsnut geradlinig verläuft oder eine leichte Krümmung aufweist und die Spanneinheit beim Bewegungsvorgang an einem Innenwandungsbereich der Öffnung zusätzlich zwangsgeführt ist, derart, dass der Führungsschlitten und damit die Spanneinheit neben einer Translationsbewegung in Richtung der ersten Führungsnut eine Rotationsbewegung, insbesondere um zirka 90° (Altgrad), durchführt.

Um die Variabilität hinsichtlich der Einsatzmöglichkeiten von Spanneinheiten unterschiedlicher Länge und Größe zu gewährleisten, zeichnet sich eine vorteilhafte Weiterbildung dadurch aus, dass das Kulissenelement eine dritte, gerade verlaufende Führungsnut aufweist, in die die erste und zweite Führungsnut münden, derart, dass der Führungsschlitten und damit die Spanneinheit von der Löseposition aus zunächst nur eine reine Translationsbewegung und daran anschließend die kombinierte Translations- und Rotationsbewegung durchführt.

Der Winkel der ersten Führungsnut zur Horizontalen beziehungsweise der Winkel zwischen erster und dritter Führungsnut kann variieren und liegt bevorzugt im Bereich zwischen 10° - 40° (Altgrad) beziehungsweise 100° - 130° (Altgrad). Dadurch können relativ große Bordhöhen umspannt werden.

Bevorzugt ist die Pineinheit als Rundpineinheit ausgebildet, so dass die Spannvorrichtung im eingesetzten Zustand in die Position gedreht werden kann, in der ein Verspannen über die Spannfläche der Spanneinheit gewünscht wird.

Eine besonders kompakte Ausführungsvariante zeichnet sich dadurch aus, dass der/die nach außen offene/n Bereich/e der Öffnung/des Schlitzes der Pineinheit in der Seitenwandung der Pineinheit angeordnet ist, das heißt die Pineinheit von oben her ein geschlossenes Erscheinungsbild aufweist, wodurch einer Verschmutzung des Inneren der Spannvorrichtung weiter entgegengewirkt wird.

Besonders vorteilhaft ist es, die Pineinheit lösbar an der Gehäuseeinheit und/oder die Spanneinheit lösbar an dem Führungsschlitten und/oder die Auflageeinheit lösbar' an der Gehäuseeinheit anzuschließen.

Gemäß einer besonders bevorzugten Ausgestaltung ist zwischen der Spanneinheit und dem Führungsschlitten und/oder zwischen der Auflageeinheit und der Gehäuseeinheit zumindest eine Ausgleichsplatte anordenbar beziehungsweise angeordnet.

Eine besonders vorteilhafte einfache konstruktive Ausführungsvariante zeichnet sich dadurch aus, dass die Mittel zum Führen eine um eine Drehachse drehbare Umwerferhebeleinheit aufweisen, deren freier Endbereich auf den Führungsschlitten einwirkt, insbesondere deren Außenkontur an der Außenkontur des Führungsschlittens gleitend anliegt, und deren Drehung die zwangsgesteuerte Bewegung des Führungsschlittens und damit der Spanneinheit bewirkt, wobei bevorzugt die Umwerferhebeleinheit über eine Koppeleinheit an den Führungsschlitten angeschlossen ist, die an dem Führungsschlitten und an dem Endbereich der Umwerferhebeleinheit gelenkig angeschlossen ist, um so ein Zurückführen des Führungsschlittens zu gewährleisten.

Eine besonders einfache Bedienbarkeit der erfindungsgemäßen Spannvorrichtung ist gemäß einer bevorzugten Ausgestaltung dadurch gekennzeichnet, dass in der Drehachse der Umwerferhebeleinheit eine Kontureinheit zum Ansetzen eines Drehwerkzeugs vorhanden ist.

Ein Drehantrieb der Umwerferhebeleinheit kann auch bevorzugt pneumatisch oder hydraulisch oder elektrisch angetrieben ausgebildet sein.

Eine besonders bevorzugte Weiterbildung, die eine zuverlässige Spannfunktion während des Bearbeitungsvorgangs gewährleistet, zeichnet sich dadurch aus, dass die Außenkontur des Endbereiches der Umwerferhebeleinheit und die Außenkontur des Führungsschlittens so ausgebildet sind, dass bei Erreichen der Spannposition ein Selbsthemmungsmechanismus, insbesondere nach dem Kniehebelprinzip, zwischen dem Führungsschlitten und der Umwerferhebeleinheit gegeben ist, das heißt bei Auftreten von entgegen der Spannrichtung wirkenden Kräften die Umwerferhebeleinheit gegen einen Anschlag gepresst wird.

Eine Ausführungsform, die eine wirtschaftliche Herstellung ermöglicht, einen konstruktiv einfachen Aufbau besitzt und eine dauerhaft zuverlässige Funktion gewährleistet, zeichnet sich dadurch aus, dass zwei parallel beabstandet angeordnete Kulissenelemente vorhanden sind und die Mittel zum Führen im Zwischenraum zwischen den beiden Kulissenelementen angeordnet sind und die nach außen offene Öffnung der Pineinheit in den Zwischenraum der Kulissenelemente mündet.

Die Spanneinheit ist bevorzugt als hebelartiger Spannkonturstein ausgebildet. Von besonderem Vorteil ist es, die Spannfläche der Spanneinheit bearbeitbar auszubilden, so dass diese an den jeweiligen Einsatzzweck problemlos angepasst werden kann.

Die erfindungsgemäße Spannvorrichtung kann in vorteilhafter Art und Weise zum Spannen bei schlechter Zugängigkeit eingesetzt werden. Die Kombination mit einer Pinfixierung bringt eine Platzersparnis mit sich. Dies gewährleistet gleichzeitig einen wirtschaftlichen Einsatz der erfindungsgemäßen Spannvorrichtung. Darüber hinaus ist ein Spannen in ge-schlossenen Hohlräumen möglich.

Nachfolgend werden beispielhafte Vorteile gegenüber bekannten Unterbau-Spannvorrichtungen aufgeführt, die mit der erfindungsgemäßen Unterbau-Spannvorrichtung erzielt werden können.

Durch die Austauschbarkeit der Spanneinheit beziehungsweise des Spannkontursteins ist eine Anpassung an Bauteiländerungen problemlos jederzeit möglich.

Durch die Bearbeitbarkeit der Spannfläche der Spanneinheit erhöht sich die Einsatzbreite der erfindungsgemäßen Spannvorrichtung durch einfache Anpassung an die jeweils vorgegebenen Geometrien.

Die Variabilität wird weiterhin dadurch erhöht, dass unter der Spanneinheit oder unter der Auflageeinheit Ausgleichsplatten angeordnet werden können, um einen zuverlässigen Spannvorgang bei unterschiedlichen vorliegenden Geometrien des Bauteils zu gewährleisten.

Die Pineinheit kann sicher an der Spannvorrichtung fixiert werden (Rundum-Fixierung). Es sind Blechstärken bis beispielsweise 20 mm (Millimeter) problemlos spannbar, je nach Ausführung der Kulissenführung.

Dadurch, dass die Pineinheit austauschbar ausgebildet ist, lässt sich die erfindungsgemäße Spannvorrichtung problemlos bei geänderten Vorgaben des Bauteils einsetzen.

Mit der erfindungsgemäßen Spannvorrichtung lässt sich eine relativ niedrige Aufbauhöhe der Pineinheit umsetzen. Darüber hinaus ist die Lage der Spannstelle relativ zur Pineinheit frei wählbar.

Durch den konstruktiv kompakten Aufbau in Verbindung mit einer relativ kleinen Schlitzbreite des Schlitzes der Pineinheit ist die Innenmechanik der Spannvorrichtung weitestgehend vor Verschmutzung geschützt.

Mit der erfindungsgemäßen Spannvorrichtung lassen sich relativ große Spannflächen umsetzen, so dass einer Blechdeformationsgefahr, die bei den relativ kleinen Spannflächen der bekannten Spannvorrichtungen gegeben ist, entgegengewirkt werden kann.

Durch die selbsthemmende Ausbildung der Mittel zum Führen der Spanneinheit im Spannzustand kann ohne Vorspannung gearbeitet werden und ein sicheres Halten des Bauteils auch bei Energieausfall ist gewährleistet.

Ausführungsformen und Vorteile der Erfindung ergeben sich durch die in den Patentansprüchen aufgeführten Merkmale.

Die Erfindung sowie vorteilhafte Ausführungsformen und Weiterbildungen derselben werden im Folgenden anhand der in der Zeichnung dargestellten Beispiele näher beschrieben und erläutert. Es zeigen:

Fig. 1 schematische Seitenansicht (in durchsichtiger Darstellung) einer Spannvorrichtung mit einer bewegbaren Spanneinheit, wobei die Spanneinheit während des Bewegungsvorgangs eine Translations- und Rotationsbewegung ausführt,

Fig. 2a bis 2e schematische Seitenansicht der Spannvorrichtung gemäß Fig. 1 mit unterschiedlichen Positionen der Spanneinheit, nämlich von der Löseposition (Fig. 2a) bis hin zur Spannposition (Fig. 2e),

Fig. 3 schematische Perspektivdarstellung der Spannvorrichtung gemäß Fig. 1 mit angeschlossenen Anschlusseinrichtungen zum Anschluss an eine Unterkonstruktion,

Fig. 4 schematische Seitenansicht der Spannvorrichtung gemäß Fig. 1 in selbsthemmender Spannposition,

Fig. 5 schematische Perspektiv-Draufsicht auf die Spannvorrichtung gemäß Fig. 1 und

Fig. 6 schematische Detailperspektive des Einsatzes mehrerer Spannvorrichtungen gemäß Fig. 1 zum Fixieren eines Blechbauteils.

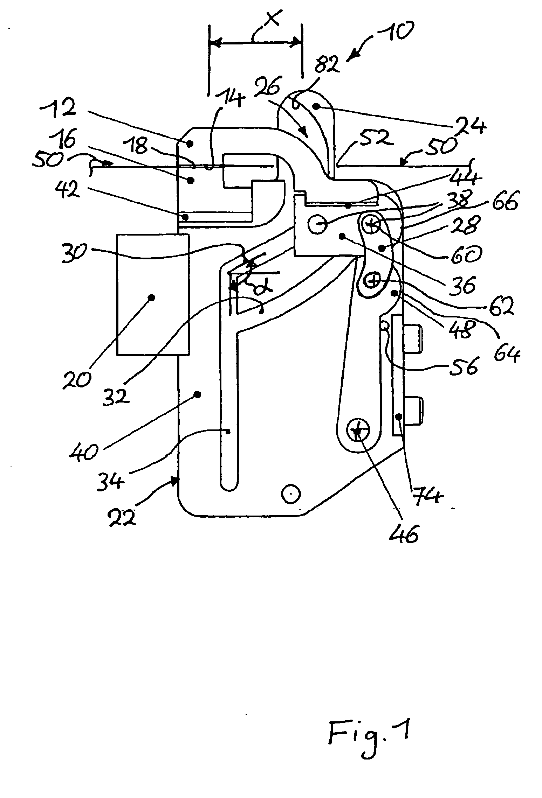

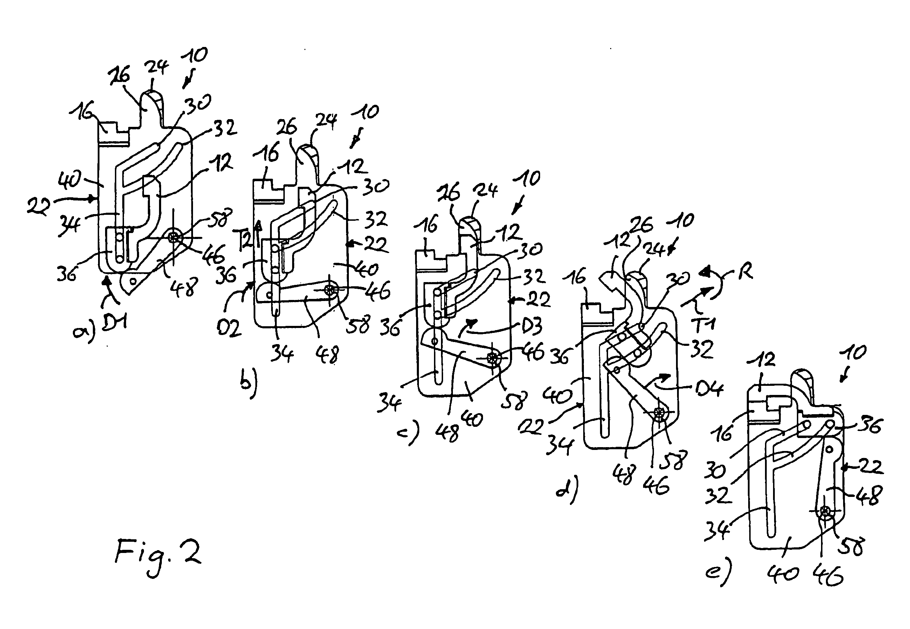

In Fig. 1 ist in einer durchsichtigen Seitenansicht ein Ausführungsbeispiel einer Spannvorrichtung 10 dargestellt, das eine Gehäuseeinheit 22 (durchsichtig dargestellt), eine bewegbare Spanneinheit 12, die als Spannkonturstein ausgebildet ist, eine Auflageeinheit 16 und eine nach oben weisende Pineinheit 24, die im dargestellten Ausführungsbeispiel als Rund-pin ausgebildet ist, aufweist. Über weiter unten beschriebene Mittel zum Führen der Spanneinheit 12 kann diese von einer Spannposition (Fig. 1) in eine Löseposition (Fig. 2a) und umgekehrt bewegt werden.

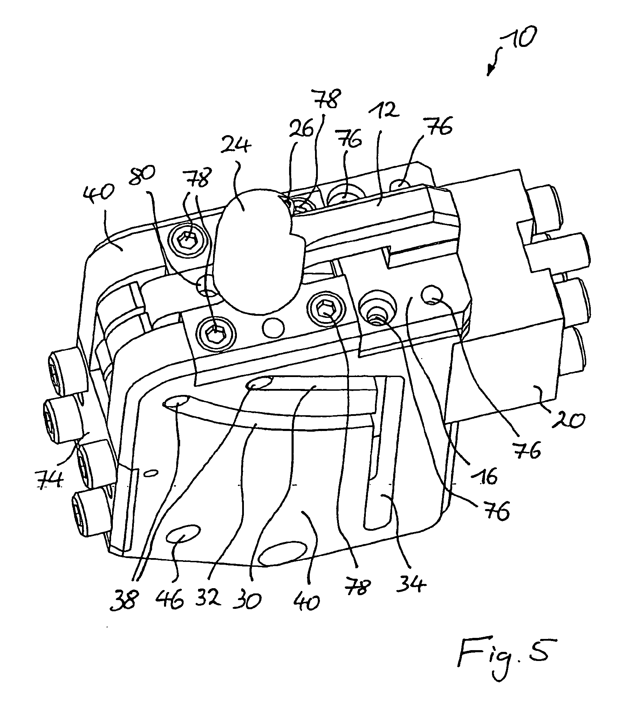

Die Gehäuseeinheit 22 weist zwei parallel beabstandet angeordnete, plattenartige Kulissenelemente 40 auf (siehe Fig. 5), wobei die Mittel zum Führen im Zwischenraum zwischen beiden Kulissenelementen 40 angeordnet sind und die Gehäuseeinheit 22 weitere nach außen abschließende, in Fig. 1 nicht dargestellte Wandbereiche aufweist, die einen unterseitig geschlossenen Kasten bilden.

In Fig. 1 ist ein zu spannendes Bauteil 50 in horizontaler Position dargestellt, das eine Ausnehmung 52 aufweist, durch die hindurch die Pineinheit 24 geführt wird.

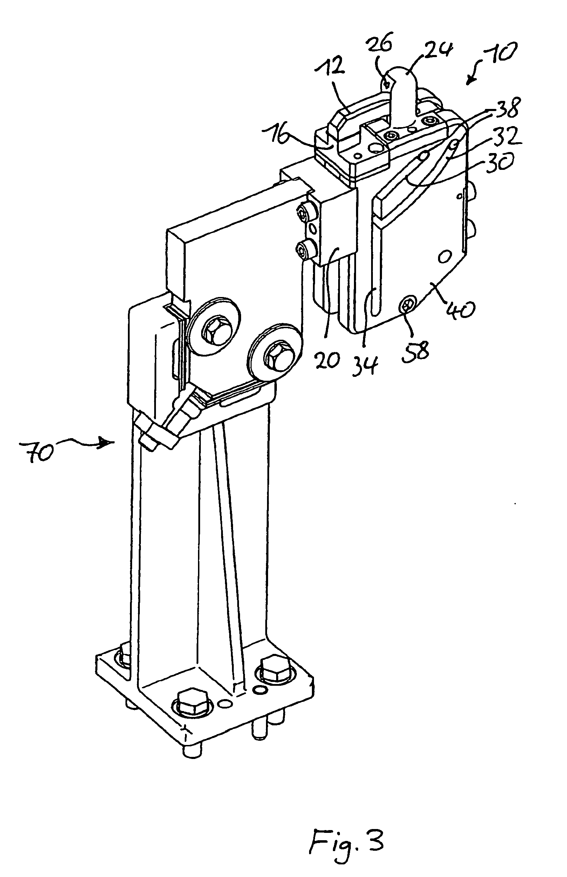

Im in Fig. 1 linken oberen Bereich der Gehäuseeinheit 22 ist eine nach links weisende Anschlusseinheit 20 vorhanden, die dazu dient, dass weitere Anschlusseinrichtungen 70 (siehe Fig. 3) angeschlossen werden können, die wiederum an eine Unterkonstruktion ortsfest anschließbar sind.

Die Auflageeinheit 16 ist im in Fig. 1 linken oberen Randbereich angeordnet und weist eine nach oben überstehende, rechteckförmige Auflagefläche 18 auf. Die Auflageeinheit 16 ist über erste Schraubelemente 76 (siehe Fig. 5) mit der Gehäuseeinheit 22 lösbar verbunden. Zwischen der Auflageeinheit 16 und dem oberen Rand der Gehäuseeinheit 22 ist eine Ausgleichsplatte 42 angeordnet.

Unmittelbar an die Auflageeinheit 16 anschließend ist oberseitig auf der Gehäuseeinheit 22 die Pineinheit 24 über zweite Schraubelemente 78 (siehe Fig. 5) lösbar angeschlossen. Die Pineinheit 24 weist einen in Fig. 1 seitlich nach links offenen Schlitz 26 auf, der in den Zwischenraum zwischen den beiden Kulissenelementen 40 führt. Durch diesen Schlitz 26 wird die Spanneinheit 12 hindurchgeführt.

Die Spanneinheit 12 ist über dritte Schraubelemente 80 (siehe Fig. 5) lösbar mit einem Führungsschlitten 36 verbunden, der im Zwischenraum zwischen den beiden Kulissenelementen 40 bewegbar und führbar vorhanden ist.

Die Spanneinheit 12 ist hebelartig ausgebildet, indem an den Anschlussbereich zum Führungsschlitten 36 in Fig. 1 zunächst ein nach oben weisender gekrümmter Bereich anschließt, der sich in einen in Fig. 1 nach links weisenden geraden Bereich verlängert. Im Endbereich des geraden Bereichs ist eine nach unten vorspringende, rechteckförmige Spannfläche 14 vorhanden, die hinsichtlich ihrer Umfangsgeometrie der Umfangsgeometrie der Auflagefläche 18 der Auflageeinheit 16 entsprechen kann. Zwischen diesen beiden Flächen wird das Bauteil 40 in gespanntem Zustand (gemäß Fig. 1) fixiert.

Zwischen dem Führungsschlitten 36 und dem Anschlussbereich der Spanneinheit 12 ist eine weitere Ausgleichsplatte 44 vorhanden.

Beide Kulissenelemente 40 weisen eine in Fig. 1 im linken Bereich vertikal verlaufende dritte Führungsnut 34 auf. Im oberen Endbereich der dritten Führungsnut 34 mündet eine in Fig. 1 schräg nach rechts oben geradlinig verlaufende erste Führungsnut 30. Unterhalb der ersten Führungsnut 30 ist eine aus Sicht der ersten Führungsnut 30 leicht konvex gekrümmte zweite Führungsnut 32 vorhanden, die ebenfalls in die dritte Führungsnut 34 mündet. In den genannten Führungsnuten kommen zwei an dem Führungsschlitten 36 angeformte Führungszapfen 38 in Eingriff, die eine Zwangsführung hinsichtlich der Bewegung des Führungsschlittens 36 und damit der Spanneinheit 12 bewirken. Der Winkel α zwischen der ersten Führungsnut 30 und der dritten Führungsnut 34 liegt bevorzugt im Bereich zwischen 110° - 120° (Altgrad).

Im in Fig. 1 rechten Bereich des Kulissenelements 40 ist eine Umwerferhebeleinheit 48 angeordnet, die in ihrem unteren Endbereich um eine Drehachse 46 drehbar gelagert ist. Die Umwerferhebeleinheit 48 besitzt in ihrem freien Endbereich eine teilkreisförmige Rundungskontur 64. Ebenso weist der Führungsschlitten 36 in dem in Fig. 1 rechten Endbereich eine teilkreisförmige Rundungskontur 66 auf. Die Rundungskonturen 64, 66 liegen gleitend einander gegenüber. Die Umwerferhebeleinheit 48 ist über eine Koppeleinheit 28 mit dem Führungsschlitten 36 gekoppelt. Die Koppeleinheit 28 selbst ist über ein zweites Gelenk 62 gelenkig an die Umwerferhebeleinheit 48 und über ein erstes Gelenk 60 gelenkig an den Führungsschlitten 36 angeschlossen, wobei das erste Gelenk 60 gleichzeitig durch den in Fig. 1 rechten Führungszapfen 38 gebildet wird. Die Koppeleinheit 28 dient vornehmlich dazu, die Rückholbewegung der ausgefahrenen Spanneinheit 12 zu unterstützen.

Ein in Fig. 1 im rechten Randbereich des Kulissenelements 40 vorhandener Anschlag 56 begrenzt die Drehbewegung der Umwerferhebeleinheit 48. Weiterhin ist in Fig. 1 im rechten unteren Seitenrandbereich ein Wechseleinsatz 74 für die Anschlusseinheit 20 angeschlossen.

Mit der Spannvorrichtung 10 ist es möglich, das Bauteil 50 mit einem relativ großen Abstand X zur Ausnehmung 52 zu spannen.

Der Bewegungsablauf beim Spannvorgang wird im Folgenden anhand der Fig. 2a bis 2e erläutert. In den Fig. 2a bis 2e ist die Koppeleinheit 28 nicht näher dargestellt.

In Fig. 2a befindet sich die Spanneinheit 12 in Löseposition, das heißt in vollständig in das Innere der Gehäuseeinheit 22 eingefahrener Position. Die Führungszapfen 38 des Führungsschlittens 36 befinden sich im unteren Bereich der dritten Nut 34 in vertikaler Position übereinander. Die Spanneinheit 12 befindet sich ebenfalls in vertikaler Position. Im Bereich der Drehachse 46 der Umwerferhebeleinheit 48 ist eine Kontureinheit 58 zum Ansatz eines Drehwerkzeuges vorhanden. Zum Einleiten des Spannvorgangs wird die Umwerferhebeleinheit 48 gemäß Pfeilrichtung D1 im Uhrzeigersinn gedreht, wodurch der Führungsschlitten 36 und damit auch die Spanneinheit 12 eine Translationsbewegung T2 (Fig. 2b) nach oben durchführt. Aufgrund der weiteren Drehbewegung D2 gelangt der Führungsschlitten 36 in den oberen Endbereich der dritten Führungsnut 34 (Fig. 2c). Der Abstand der beiden Führungszapfen 38 ist dabei so gewählt, dass diese nunmehr jeweils in den Einmündungsbereich der ersten beziehungsweise zweiten Führungsnut 30, 32 eingeführt werden können. Durch weitere Drehung in Pfeilrichtung D3 beziehungsweise D4 führt nun der Führungsschlitten 36 und damit auch die Spanneinheit 12 eine Translationsbewegung T1 in Richtung der ersten Führungsnut 30 und gleichzeitig eine Rotationsbewegung R entgegen dem Uhrzeigersinn aufgrund der konvexen Krümmung der zweiten Führungsnut 32 durch. Durch diesen kombinatorische Bewegungsmechanismus wird die Spanneinheit 12 durch den Schlitz 26 der Pineinheit 24 nach außen geführt und gelangt schließlich in eine horizontale Spannposition gemäß Fig. 2e.

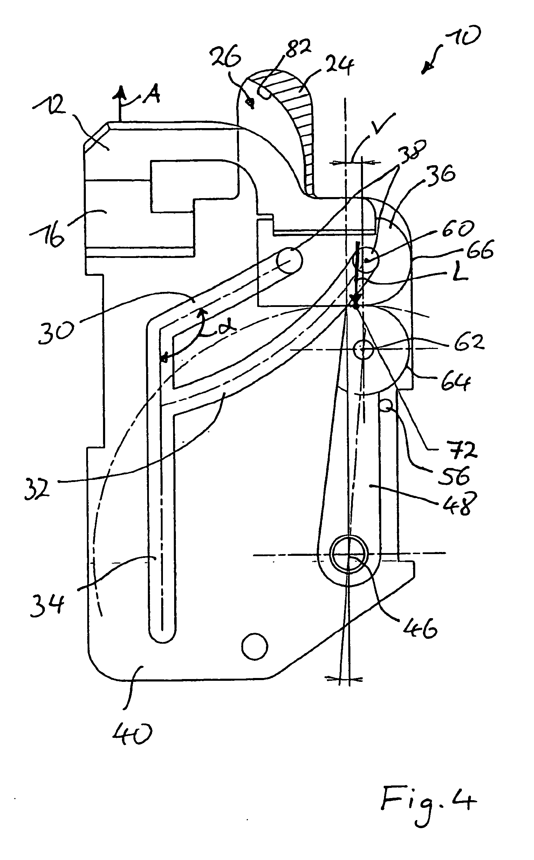

Während des gesamten Drehvorgangs der Umwerferhebeleinheit 48 liegt diese mit ihrer Rundungskontur 64 an der Rundungskontur 66 des Führungsschlittens 36 an. In Spannposition gemäß Fig. 2e beziehungsweise gemäß der Darstellung in Fig. 4 befindet sich die Umwerferhebeleinheit 48 in einer selbsthemmenden Position. Die Umwerferhebeleinheit 48 liegt am Anschlag 56 an. In dieser Position besitzt das zweite Gelenk 62 gegenüber der Drehachse 46 gemäß Fig. 4 einen Versatz V nach rechts. Im Bereich des Versatzes V sind die anliegenden Konturflächen des Führungsschlittens 36 und der Umwerferhebeleinheit 48 eben ausgebildet.

Sobald nun auf die Spanneinheit 12 eine entgegen der Spannrichtung wirkende Lösekraft A einwirkt, erzeugt diese eine auf die Umwerferhebeleinheit 48 wirkende Lagerkraft L, deren Angriffspunkt 72 innerhalb der ebenen Anlageflächen des Führungsschlittens 36 und der Umwerferhebeleinheit 48 wirkt. Durch diese Lagerkraft L wird ein rechtsdrehendes Moment erzeugt, das heißt die Umwerferhebeleinheit 48 wird weiter gegen den Anschlag 56 gedrückt. Dadurch ist ein Selbsthemmungsmechanismus gegeben.

In Fig. 3 ist schematisch in einer Perspektive der Anschluss einer Anschlusseinrichtung 70 an die Anschlusseinheit 20 der Spannvorrichtung 10 dargestellt. Die Anschlusseinrichtung 70 wird im Einsatzfall an eine nicht näher dargestellte Unterkonstruktion angeschlossen.

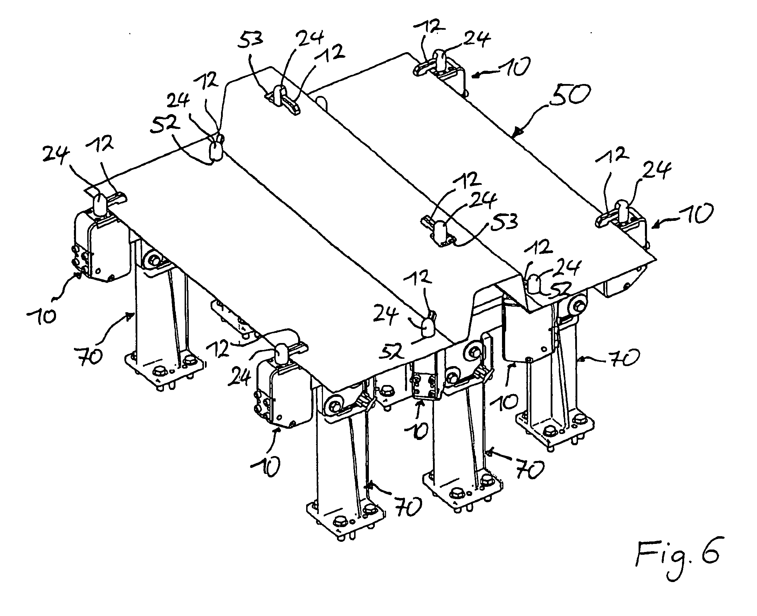

Fig. 6 zeigt einen praktischen Einsatzfall der oben beschriebenen Spannvorrichtung 10 mit Anschlusseinrichtungen 70 an einem zu fixierenden Bauteil 50. Die Spannvorrichtung 10 kann sowohl über die Randseite des Bauteils 50 her spannend eingesetzt werden, als auch im Inneren des Bauteils 50 zu Spannzwecken verwendet werden, indem in einfacher Art und Weise von unten her die Spannvorrichtung 10 über die Pineinheit 24 in die entsprechende Ausnehmung 52 des Bauteils 50 eingeführt wird und anschließend die Spanneinheit 12 durch Drehung der Umwerferhebeleinheit 48 in Spannposition durch den Schlitz 26 der Pineinheit 24 ausgefahren wird. Bei den innenseitig mittig angeordneten Spannvorrichtungen 10 ist eine rechteckförmige Ausnehmung 53 vorhanden, durch die die Pineinheit 24 geführt ist, d. h. in diesem Fall ist keine automatische Lagepositionierung des Bauteils gegeben.

Durch die Lösbarkeit der Spanneinheit 12, der Pineinheit 24 und der Auflageeinheit 16 ist ein variabler Einsatz der beschriebenen Spannvorrichtung 10 problemlos möglich.

Ein wesentliches Merkmal der anmeldegemäßen Spannvorrichtung besteht darin, dass die Spanneinheit 12 beim Bewegungsvorgang eine kombinatorische Translationsbewegung TI und Rotationsbewegung R durchführt (Fig. 2c, 2d, 2e), während die Spanneinheit 12 durch den Schlitz 26 der Pineinheit 24 nach außen geführt wird. Dies wird durch die beschriebene Geometrie der ersten und zweiten Führungsnut 30, 32 gewährleistet. Die dritte Führungsnut 34, die eine reine Translationsbewegung T2 der Spanneinheit 12 ermöglicht, dient dazu, dass innerhalb derselben Gehäuseeinheit 22 größere Spanneinheiten 12 mit entsprechend größeren Pineinheiten 24 verwendet werden können.

Eine in den Figuren nicht näher dargestellte zweite konstruktive Ausführungsvariante einer Spannvorrichtung weist im Prinzip denselben Aufbau wie die Spannvorrichtung 10 gemäß Fig. 1 beziehungsweise Fig. 4, jedoch mit dem Unterschied, dass auf die zweite Führungsnut 32 vollständig verzichtet wird. Der Führungsschlitten 36 besitzt nur einen Führungszapfen 38, der in die dritte Führungsnut 34 beziehungsweise erste Führungsnut 30 eingreift. Diese Bauteile bilden das erste Führungszwangsmittel. Eine weitere Zwangsführung der Spanneinheit 12 beziehungsweise des Führungsschlittens 36 wird dadurch erzielt, dass die Spanneinheit 12 beim Aus- beziehungsweise Einfahrvorgang an der oberen Innenwandung 82 des Schlitzes 26 der Pineinheit 24 bereichsweise gleitend zwangsgeführt wird. Da die Kontur 64 der Umwerferhebeleinheit 48 immer direkt an der Kontur 66 des Führungsschlittens 36 während des Bewegungsvorgangs anliegt, ergibt sich auch hier eine eindeutige Zwangsführung.

Schließlich ist eine dritte, in den Figuren ebenfalls nicht dargestellte konstruktive Ausführungsvariante möglich, bei der auf die dritte Führungsnut 34 vollständig verzichtet wird. Dabei führt der Führungsschlitten 36 beziehungsweise die Spanneinheit 12 lediglich eine kombinierte Rotations- und Translationsbewegung beim Ein- beziehungsweise Ausfahren aus. Die Zwangsführung kann dabei entweder durch die erste und zweite Führungsnut 30, 32 oder allein durch die erste Führungsnut 30 in Verbindung mit der oberen Innenwandung 82 der Pineinheit 24 unter Einwirkung der Umwerferhebeleinheit 48 umgesetzt werden.

Durch die Ausgestaltung der Führungsnute 30, 32 beziehungsweise 34 ist die Zwangsführungsbewegung der Spanneinheit 12 auf die jeweilige Problemstellung anpassbar. Insbesondere durch Änderung der Neigung der ersten Führungsnut 30 beziehungsweise zweiten Führungsnut 32 können unterschiedliche Bordhöhen des zu spannenden Bauteils problemlos umspannt werden. Dabei stellen beispielsweise Bordhöhen von 20 mm (Millimeter) kein Problem dar.

## Patentansprüche

1. Spannvorrichtung (10), insbesondere Unterbau-Spannvorrichtung, zum lösbaren Fixieren von Bauteilen (50), insbesondere während eines Bearbeitungsvorgangs, mit
einer von einer Löseposition in eine Spannposition und umgekehrt bewegbaren Spanneinheit (12) mit einer Spannfläche (14),
einer Auflageeinheit (16) mit einer Auflagefläche (18),
einer Anschlusseinheit (20) zum Anschließen der Spannvorrichtung (10) an eine Unterkonstruktion und
einer Gehäuseeinheit (22),
wobei das Bauteil (50) in fixiertem Zustand zwischen der Spannfläche (14) und der Auflagefläche (18) verspannt ist,
wobei eine über die Gehäuseeinheit (22) überstehende Pineinheit (24) vorhanden ist, die in eine Ausnehmung (52) des zu fixierenden Bauteils (50) einführbar ist,
wobei die Pineinheit (24) eine/n zum Inneren der Gehäuseeinheit (22) und nach außen offene/n Öffnung, insbesondere Schlitz (26), aufweist, durch die/den hindurch die Spanneinheit (12) bewegbar ist, und
wobei als Kulissenführung ausgebildete Mittel zum Führen der Bewegung der Spanneinheit (12) vorhanden sind, die beim Bewegungsvorgang der Spanneinheit (12) eine Kombination einer Translations- (T1) und Rotationsbewegung (R) umsetzen, wodurch die Spanneinheit (12) durch die/den Öffnung/Schlitz (26) der Pineinheit (24) geführt wird,
**dadurch gekennzeichnet,**
**dass** die Spanneinheit (12) an einen Führungsschlitten (36) angeschlossen ist, der zwei beabstandet angeordnete führungszapfen (38) oder -rollen aufweist,
in/an der Gehäuseeinheit (22) zumindest ein Kulissenelement (40) angeordnet ist, das eine erste Führungsnut (30) und eine beabstandet zur ersten Führungsnut (30) angeordnete zweite Führungsnut (32) aufweist,
je ein Führungszapfen (38) in die erste beziehungsweise zweite Führungsnut (30, 32) eingreift und
die erste Führungsnut (30) geradlinig verläuft oder eine leichte Krümmung aufweist und die zweite Führungsnut (32) einen von der ersten Führungsnut (30) aus gesehen konvex gekrümmten Verlauf aufweist, insbesondere derart, dass der Führungsschlitten (36) und damit die Spanneinheit (12) neben einer Translationsbewegung (T1) in Richtung der ersten Führungsnut (30) eine Rotationsbewegung (R), insbesondere um zirka 90°, durchführt.

2. Spannvorrichtung (10), insbesondere Unterbau-Spannvorrichtung, zum lösbaren Fixieren von Bauteilen (50), insbesondere während eines Bearbeitungsvorgangs, mit
einer von einer Löseposition in eine Spannposition und umgekehrt bewegbaren Spanneinheit (12) mit einer fläche (14),
einer Auflageeinheit (16) mit einer Auflagefläche (18),
einer Anschlusseinheit (20) zum Abschließen, der Spannvorrichtung (10) an eine Unterkonstruktion und
einer Gehäuseeinheit (22),
wobei das Bauteil (50) in fixiertem Zustand zwischen der Spannfläche (14) und der Auflagefläche (18) verspannt ist,
wobei eine über die Gehäuseeinheit (22) überstehende Pineinheit (24) vorhanden ist, die in eine Ausnehmung (52) des zu fixierenden Bauteils (50) einführbar ist,
wobei die Pineinheit (24) eine/n zum Inneren der Gehäuseeinheit (22) und nach außen offene/n Öffnung, insbesondere Schlitz (26), aufweist, durch die/den hindurch die Spanneinheit (12) bewegbar ist, und
wobei als Kulissenführung ausgebildete Mittel zum Führen der Bewegung der Spanneinheit (12) vorhanden sind, die beim Bewegungsvorgang der Spanneinheit (12) eine Kombination einer Translations- (T1) und Rotationsbewegung (R) umsetzen, wodurch die Spanneinheit (12) durch die/den Öffnung/Schlitz (26) der Pineinheit (24) geführt wird,
**dadurch gekennzeichnet, dass**
die Spanneinheit an einen Führungsschlitten angeschlossen ist, der einem Führungszapfen beziehungsweise -rolle aufweist,
in/an der Gehäuseeinheit zumindest ein Kulissenelement angeordnet ist, das eine erste Führungsnut aufweist,
der Führungszapfen in die erste Führungsnut eingreift,
die erste Führungsnut geradlinig verläuft oder eine leichte Krümmung aufweist und
die Spanneinheit beim Bewegungsvorgang an einem Innenwandungsbereich der Öffnung zusätzlich zwangsgeführt ist, derart, dass der Führungsschlitten (36) und damit die Spanneinheit (12) neben einer Translationsbewegung (T1) in Richtung der ersten Führungsnut (30) eine Rotationsbewegung (R), insbesondere um zirka 90°, durchführt.

3. Spannvorrichtung nach Anspruch 1 oder 2,
**dadurch gekennzeichnet, dass**
das Kulissenelement (40) eine dritte, gerade verlaufende Führungsnut (34) aufweist, in die die erste und/oder zweite Führungsnut (30, 32) münden, derart, dass der Führungsschlitten (36) und damit die Spanneinheit (12) von der Löseposition aus zunächst nur eine reine Translationsbewegung (T2) und daran anschließend die kombinierte Translations und Rotationsbewegung (T1, R) durchführt.

4. Spannvorrichtung nach Anspruch 3,
**dadurch gekennzeichnet,**
**dass** der Winkel (α) zwischen der ersten und dritten Führungsnut (30, 34) im Bereich zwischen 100°-130°, insbesondere zwischen 110°-120° liegt.

5. Spannvorrichtung nach einem oder mehreren der vorstehenden Ansprüche,
**dadurch gekennzeichnet,**
**dass** die Pineinheit (24) als Rundpineinheit ausgebildet ist.

6. Spannvorrichtung nach einem oder mehreren der vorstehenden Ansprüche,
**dadurch gekennzeichnet,**
**dass** der nach außen offene Bereich des Schlitzes (26) der Pineinheit (24) in der Seitenwandung der Pineinheit (24) angeordnet ist.

7. Spannvorrichtung nach einem oder mehreren der vorstehenden Ansprüche,
**dadurch gekennzeichnet,**
**dass** die Pineinheit (24) lösbar an der Gehäuseeinheit (22) angeschlossen ist.

8. Spannvorrichtung nach einem oder mehreren der vorstehenden Ansprüche,
**dadurch gekennzeichnet,**
**dass** die Spanneinheit (12) lösbar an dem Führungsschlitten (36) angeschlossen ist.

9. Spannvorrichtung nach einem oder mehreren der vorstehenden Ansprüche,
**dadurch gekennzeichnet,**
**dass** die Auflageeinheit (16) lösbar an der Gehäuseeinheit (22) angeschlossen ist.

10. Spannvorrichtung nach Anspruch 9,
**dadurch gekennzeichnet,**
**dass** zwischen der Spanneinheit (12) und dem Führungsschlitten (36) zumindest eine Ausgleichsplatte (42) anordenbar beziehungsweise angeordnet ist.

11. Spannvorrichtung nach Anspruch 10,
**dadurch gekennzeichnet,**
**dass** zwischen der Auflageeinheit (16) und der Gehäuseeinheit (22) zumindest eine Ausgleichsplatte (44) anordenbar beziehungsweise angeordnet ist.

12. Spannvorrichtung nach einem oder mehreren der Ansprüche 1 bis 11,
**dadurch gekennzeichnet,**
**dass** die Mittel zum Führen eine um eine Drehachse (46) drehbare Umwerferhebeleinheit (48) aufweisen, deren freier Endbereich auf den Führungsschlitten (36) einwirkt, insbesondere deren Außenkontur (64) an der Außenkontur (66) des Führungsschlittens (36) gleitend anliegt, und deren Drehung die zwangsgesteuerte Bewegung des Führungsschlittens (36) und damit der Spanneinheit (12) bewirkt.

13. Spannvorrichtung nach Anspruch 12,
**dadurch gekennzeichnet,**
**dass** die Umwerferhebeleinheit (48) weiterhin über eine Koppeleinheit (28) an den Führungsschlitten (36) angeschlossen ist, die an den Führungsschlitten (36) und an den Endbereich der Umwerferhebeleinheit (48) gelenkig angeschlossen ist.

14. Spannvorrichtung nach Anspruch 12 oder 13,
**dadurch gekennzeichnet,**
**dass** in der Drehachse (46) der Umwerferhebeleinheit (48) eine Kontureinheit (58) zum Ansetzen eines Drehwerkzeuges vorhanden ist.

15. Spannvorrichtung nach Anspruch 12 oder 13,
**dadurch gekennzeichnet,**
**dass** die Drehung der Umwerferhebeleinheit über ansteuerbare pneumatische, hydraulische oder elektrische Mittel erfolgt.

16. Spannvorrichtung nach einem oder mehreren der Ansprüche 12 bis 15,
**dadurch gekennzeichnet,**
**dass** die Außenkontur (64) des Endbereiches der Umwerferhebeleinheit (48) und die Außenkontur (66) des Führungsschlittens (36) so ausgebildet sind, dass bei Erreichen der Spannposition ein selbsthemmungsmechanismus zwischen dem Führungsschlitten (36) und der Umwerferhebeleinheit (48) gegeben ist, das heißt bei Auftreten von entgegen der Spannrichtung wirkenden Kräften die Umwerferhebeleinheit (48) gegen einen Anschlag (56) gepresst wird.

17. Spannvorrichtung nach Anspruch 16,
**dadurch gekennzeichnet,**
**dass** der Selbsthemmungsmechanismus nach dem Kniehebelprinzip arbeitet.

18. Spannvorrichtung nach einem oder mehreren der Ansprüche 1 bis 17,
**dadurch gekennzeichnet,**
**dass** zwei parallel beabstandet angeordnete Kulissenelemente (42) vorhanden sind und die Mittel zum Führen im Zwischenraum zwischen den beiden Kulissenelementen (42) angeordnet sind und der nach außen offene Schlitz (26) der Pineinheit (24) in den Zwischenraum der Kulissenelemente (42) mündet.

19. Spannvorrichtung nach einem oder mehreren der vorstehenden Ansprüche,
**dadurch gekennzeichnet,**
**dass** die Spannfläche (14) der Spanneinheit (12) bearbeitbar ausgebildet ist.

20. Spannvorrichtung nach einem oder mehreren der vorstehenden Ansprüche,
**dadurch gekennzeichnet,**
**dass** die Spanneinheit (12) als hebelartiger Spannkonturstein ausgebildet ist.

## Claims

1. A clamping device (10), in particular a substructure clamping device, for the detachable fixing of components (50), particularly during a machining process, with a clamping unit (12) that can be moved from a release position to a clamping position and vice versa, which surface has a clamping surface (14), a contact unit (16), with a contact surface (18), a connecting unit (20) for connecting the clamping device (10) to a substructure, and a housing unit (22), wherein the component (50), when in the fixed condition, is clamped between the clamping surface (14) and the contact surface (18), wherein a pin unit (24) is provided projecting from the housing unit (22), wherein the pin unit (24) has an orifice, in particular a slot (26), which opens outwardly towards the inside of the housing unit (22), through which orifice/slot the clamping unit (12) can be moved, and wherein means designed as a slotted guide are provided for guiding the movement of the clamping unit (12), which means perform a combination of a translation (T1) and rotation movement (R) during the movement process, whereby the clamping movement (12) is guided by the orifice/slot (26) in the pin unit (24), **characterised in that** the clamping unit (12) is connected to a guiding slide (36) which has two guide pins (38) or rolls arranged at a certain distance from each other, **in that** at least one slotted element (40) is arranged in/on the housing unit (22), which element has a first guide groove (30) and a second guide groove (32) arranged at a certain distance from the first guide groove (30), **in that** a guide pin (38) engages in the first or second guide groove (30, 32), and **in that** the first guide groove (30) runs rectilinearly or has a slight curvature and the second guide groove (32) has a convexly curved course, viewed from the first guide groove (30), in particular in such a manner that the guiding slide (36) and hence the clamping unit (12) perform not only a translation movement (T1) in the direction of the first guide groove (30), but also a rotation movement (R), in particular by an angle of 90°.

2. The clamping device (10), in particular a substructure clamping device, for the releasable fixing of components (50), particularly during a machining process, with a clamping unit (12) with a clamping surface (14), that can be moved from a release position to a clamping position, a contact unit (16) with a contact surface (18), a connecting unit (20) for connecting the clamping device (10) to a substructure and a housing unit (22), wherein the component (50), in the fixed condition, is clamped between the clamping surface (14) and the contact surface (18), wherein a pin unit (24) is provided projecting from the housing unit (22), which unit can be inserted in a recess (52) of the component (50) to be fixed, wherein the pin unit (24) has an opening, particularly a slot (26) that is outwardly open towards the inside of the housing unit (22), through which orifice/slot the clamping unit (12) can be moved, and wherein means designed as a slotted guide are provided for guiding the movement of the clamping unit (12), which means perform a combination of a translation (T1) and rotation movement (R)during the movement process, whereby the clamping unit (12) is guided through the orifice/slot (26) of the pin unit (24), **characterised in that** the clamping unit is connected to a guiding slide which has a guide pin or roll, **in that** at least one slotted element is arranged in/on the housing unit, which element has a first guide groove, **in that** the guide pin engages in the first guide groove, **in that** the first guide groove runs in a straight line or has a slight curvature, and **in that** the clamping unit, during the movement process, is also forced guided on an inner wall of the orifice so that the guiding slide (36), and hence the clamping unit (12), perform not only a translation movement (T1) in the direction of the first guide groove (30), but also a rotation movement (R), particularly by an angle of 90°.

3. The clamping device according to Claim 1 or 2, **characterised in that** the slotted element (40) has a third, straight running guide groove (34) into which open the first and second guide grooves (30, 32) so that the guiding slide (36), and hence the clamping unit (12), perform initially only one pure translation movement (T2) from the release position, then the combined translation and rotation movement (T1, R).

4. The clamping device according to Claim 3, **characterised in that** the angle (α) between the first and third guide grooves (30, 34) lies in the range of 100° - 130°, in particular in the range of 110° - 120°.

5. The clamping device according to one or more of the preceding claims, **characterised in that** the pin unit (24) is designed as a round pin unit.

6. The clamping device according to one or more of the preceding claims, **characterised in that** the outwardly open region of the slot (26) of the pin unit (24) is arranged in the lateral wall of the pin unit (24).

7. The clamping device according to one or more of the preceding claims, **characterised in that** the pin unit (24) is releasably connected to the housing unit (22).

8. The clamping device according to one or more of the preceding claims, **characterised in that** the clamping unit (12) is releasably connected to the guiding slide (36).

9. The clamping device according to one or more of the preceding claims, **characterised in that** the contact unit (16) is releasably connected to the housing unit (22).

10. The clamping unit according to Claim 9, **characterised in that** at least one compensating plate (42) can be arranged or is arranged between the clamping unit (12) and the guiding slide (36).

11. The clamping device according to Claim 10, **characterised in that** at least one compensating plate (44) can be arranged or is arranged between the contact unit (16) and the housing unit (22).

12. The clamping device according to one or more of Claims 1 to 11, **characterised in that** the means for guiding have a reversing lever unit (48) rotatable about an axis of rotation (46), the free end region of which unit acts upon the guiding slide (36), and in particular its outer contour (64) bears against the outer contour (66) of the guiding slide (36) in a sliding fashion, and whose rotation effects the force controlled movement of the guiding slide (36)and hence of the clamping unit (12).

13. The clamping device according to Claim 12, **characterised in that** the reversing lever unit (48) is also connected by means of a coupling unit (28) to the guiding slide (36), which unit is connected in articulated fashion to the guiding slide (36) and to the end region of the reversing lever unit (48).

14. The clamping device according to Claim 12 or 13, **characterised in that** a contour unit (58) is provided in the axis of rotation (46) of the reversing lever unit (48) for the application of a rotary tool.

15. The clamping device according to Claim 12 or 13, **characterised in that** the rotation of the reversing lever unit takes place by means of activatable pneumatic, hydraulic or electrical means.

16. The clamping device according to one or more of Claims 12 to 15, **characterised in that** the outer contour (64) of the end region of the reversing lever unit (48) and the outer contour (66) of the guiding slide (36) are designed so that when the clamping position is reached, a self-inhibiting mechanism is provided between the guiding slide (36) and the reversing lever unit (48), i.e. when forces acting against the clamping direction are generated, the reversing lever unit (48) is pressed against a stop (56).

17. The clamping device according to Claim 16, **characterised in that** the self-inhibiting mechanism operates on the bent leer principle.

18. The clamping device according to one or more of Claims 1 to 17, **characterised in that** two slotted elements (40) are provided which are arranged in parallel at a certain distance from each other, and the means for guidance are arranged in the interval between the two slotted elements (40) and **in that** the outwardly open slot (26) of the pin unit (24) opens into the interval between the slotted elements (40).

19. The clamping device according to one or more of the preceding claims, **characterised in that** the clamping surface (14) of the clamping unit (12) is designed so that it can be machined.

20. The clamping device according to one or more of the preceding claims, **characterised in that** the clamping unit (12) is designed as a lever-type clamping contour stone.

## Revendications

1. Dispositif de serrage (10), notamment dispositif de serrage de structure inférieure pour la fixation amovible d'éléments de construction (50) pendant un processus d'usinage, avec
une unité de serrage (12) mobile d'une position de desserrage dans une position de serrage et inversement, avec une surface de serrage (14),
une unité d'appui (16) avec une surface d'appui (18), une unité de raccordement (20) pour le raccordement du dispositif de serrage (10) sur une structure inférieure et
une unité de boîtier (22),
en position fixée, l'élément de construction (50) étant bloqué entre la surface de serrage (14) et la surface d'appui (18),
une unité de broche (24) débordant par dessus l'unité de boîtier (22) pouvant s'introduire dans un évidement (52) de l'élément de construction (50) à fixer étant présente,
l'unité de broche 24 comportant un orifice, notamment une fente (26) ouvert(e) sur l'intérieur de l'unité de boîtier (22) et sur l'extérieur, à travers laquelle/lequel l'unité de serrage (12) est mobile, et
des moyens conçus sous la forme de guidages à coulisses pour le guidage du déplacement de l'unité de serrage (12) étant présents, qui lors du processus de déplacement de l'unité de serrage (12) effectuent une association d'un déplacement en translation (T1) et en rotation (R), suite à laquelle l'unité de serrage (12) est guidée à travers l'orifice/la fente (26) de l'unité de broche 24,
**caractérisé en ce que**
l'unité de serrage (12) est raccordée sur un chariot de guidage (36), comportant deux tenons ou galets de guidage (38) disposés à distance mutuelle,
**en ce que** dans/sur l'unité de boîtier (22) est disposé au moins un élément à coulisse (40), comportant une première rainure de guidage (30) et une deuxième rainure de guidage (32) disposée à distance de la première rainure de guidage (30),
**en ce que** chaque fois un tenon de guidage (38) s'engage dans la première, respectivement dans la deuxième rainure de guidage (30, 32), et
**en ce que** la première rainure de guidage (30) s'étend de façon rectiligne ou légèrement curviligne et la deuxième rainure de guidage (32) a un trajet curviligne convexe, vu à partir de la première rainure de guidage (30), notamment de sorte que, hormis un déplacement en translation (T1) en direction de la première rainure de guidage (30), le chariot de guidage (36) et de ce fait l'unité de serrage (12) effectue un déplacement en rotation (R), notamment d'environ 90 °.

2. Dispositif de serrage (10), notamment dispositif de serrage de structure inférieure pour la fixation amovible d'éléments de construction (50) pendant un processus d'usinage,
avec
une unité de serrage (12) mobile d'une position de desserrage dans une position de serrage et inversement, avec une surface de serrage (14),
une unité d'appui (16) avec une surface d'appui (18), une unité de raccordement (20) pour le raccordement du dispositif de serrage (10) sur une structure inférieure et
une unité de boîtier (22),
en position fixée, l'élément de construction (50) étant bloqué entre la surface de serrage (14) et la surface d'appui (18),
une unité de broche (24) débordant par dessus l'unité de boîtier (22) pouvant s'introduire dans un évidement (52) de l'élément de construction (50) à fixer étant présente,
l'unité de broche (24) comportant un orifice, notamment une fente (26) ouvert(e) sur l'intérieur de l'unité de boîtier (22) et sur l'extérieur, à travers laquelle/lequel l'unité de serrage (12) est mobile, et
des moyens conçus sous la forme de guides à coulisses pour le guidage du déplacement de l'unité de serrage (12) étant présents, qui lors du processus de déplacement de l'unité de serrage (12) effectuent une association d'un déplacement en translation (T1) et en rotation (R), suite auquel l'unité de serrage (12) est guidée à travers l'orifice/la fente (26) de l'unité de broche (24),
**caractérisé en ce que**
l'unité de serrage est raccordée sur un chariot de guidage, qui comporte un tenon ou galet de guidage,
**en ce que** dans/sur l'unité de boîtier est disposé au moins un élément à coulisse, comportant une première rainure de guidage, **en ce que** le tenon de guidage s'engage dans la première rainure de guidage, **en ce que** le première rainure de guidage s'étend de façon rectiligne ou légèrement curviligne et
**en ce que** lors du processus de déplacement, l'unité de serrage est en supplément soumise à un guidage forcé sur une zone de paroi intérieure de l'orifice, de sorte que, hormis un déplacement en translation (T1) en direction de la première rainure de guidage (30), le chariot de guidage (36) et de ce fait l'unité de serrage (12) effectue un déplacement en rotation (R) d'environ 90° (degrés).

3. Dispositif de serrage selon la revendication 1 ou 2,
**caractérisé en ce que**
l'élément à coulisse (40) comporte une troisième rainure de guidage (34) rectiligne, dans laquelle débouche(nt) la première et/ou la deuxième rainure de guidage (30, 32) de sorte que, à partir de la position de desserrage, le chariot de guidage (36) et de ce fait l'unité de serrage (12) effectue d'abord un pur déplacement en translation (T2) et suite à ce dernier, le déplacement associé en translation et en rotation (T1, R).

4. Dispositif de serrage selon la revendication 3,
**caractérisé en ce que**
l'angle (α) entre la première et la troisième rainure de guidage (30, 34) est de préférence de l'ordre de 100° à 130°, notamment de l'ordre de à 110° à 120°.

5. Dispositif de serrage selon l'une quelconque ou plusieurs des revendications précédentes,
**caractérisé en ce que**
l'unité de broche (24) est conçue sous la forme d'une unité de broche circulaire.

6. Dispositif de serrage selon l'une quelconque ou plusieurs des revendications précédentes,
**caractérisé en ce que**
la zone ouverte sur l'extérieur de la fente (26) de l'unité de broche (24) est disposée dans la paroi latérale de l'unité de broche (24).

7. Dispositif de serrage selon l'une quelconque ou plusieurs des revendications précédentes,
**caractérisé en ce que**
l'unité de broche (24) est raccordée de façon amovible sur l'unité de boîtier (22).

8. Dispositif de serrage selon l'une quelconque ou plusieurs des revendications précédentes,
**caractérisé en ce que**
l'unité de broche (12) est raccordée de façon amovible sur l'unité de boîtier (36).

9. Dispositif de serrage selon l'une quelconque ou plusieurs des revendications précédentes,
**caractérisé en ce que**
l'unité de broche (16) est raccordée de façon amovible sur l'unité de boîtier (22).

10. Dispositif de serrage selon la revendication 9,
**caractérisé en ce que**
entre l'unité de serrage (12) et le chariot de guidage (36) peut être disposée ou est disposée au moins une plaque de compensation (42).

11. Dispositif de serrage selon la revendication 10,
**caractérisé en ce que**
entre l'unité d'appui (16) et l'unité de boîtier (22) peut être disposée ou est disposée au moins une plaque de compensation (44).

12. Dispositif de serrage selon l'une quelconque ou plusieurs des revendications 1 à 11,
**caractérisé en ce que**
les moyens pour le guidage comportent une unité de levier de renversement (48) rotative autour d'un axe de rotation (46), dont la zone d'extrémité libre agit sur le chariot de guidage (36), notamment sur son contour extérieur, (64), s'appuie en glissant sur le contour extérieur (66) du chariot de guidage (36) et dont la rotation provoque le déplacement sous contrôle forcé du chariot de guidage (36) et de ce fait de l'unité de serrage (12).

13. Dispositif de serrage selon la revendication 12,
**caractérisé en ce que**
l'unité de levier de renversement (48) est raccordée par ailleurs sur le chariot de guidage (36) par l'intermédiaire d'une unité d'accouplement (28) qui est articulée sur le chariot de guidage (36) et sur la zone d'extrémité de l'unité de levier de renversement (48).

14. Dispositif de serrage selon la revendication 12 ou 13,
**caractérisé en ce que**
dans l'axe de rotation (46) de l'unité de levier de renversement (48) se trouve une unité profilée (58) pour appliquer un outil de rotation.

15. Dispositif de serrage selon la revendication 12 ou 13,
**caractérisée en ce que**,
la rotation de l'unité de levier de renversement est assurée via des moyens pneumatiques, hydrauliques ou électriques.

16. Dispositif de serrage selon l'une quelconque ou plusieurs des revendications 12 à 15,
**caractérisé en ce que**
le contour extérieur (64) de la zone d'extrémité de l'unité de levier de renversement (48) et le contour extérieur (66) du chariot de guidage (36) sont conçus de façon telle, qu'à l'atteinte de la position de serrage, un mécanisme de blocage automatique est donné entre le chariot de guidage (36) et l'unité de levier de renversement (48), c'est-à-dire qu'à l'apparition de forces agissant à l'encontre de la direction de serrage, l'unité de levier de renversement (48) est pressée contre une butée (56).

17. Dispositif de serrage selon la revendication 16,
**caractérisé en ce que**
le mécanisme de blocage automatique fonctionne selon le principe de la genouillère.

18. Dispositif de serrage selon l'une quelconque ou plusieurs des revendications 1 à 17,
**caractérisé en ce que**
deux éléments à coulisse (40) parallèles à distance sont présents et **en ce que** les moyens pour le guidage sont disposés dans l'espace intermédiaire entre les deux éléments à coulisse (40) et **en ce que** la fente (26) ouverte sur le dessus de l'unité de broche (24) débouche dans l'espace intermédiaire des éléments à coulisse (40).

19. Dispositif de serrage selon l'une quelconque ou plusieurs des revendications précédentes,
**caractérisé en ce que**
la surface de serrage (14) de l'unité de serrage (12) est conçue pour être façonnable.

20. Dispositif de serrage selon l'une quelconque ou plusieurs des revendications précédentes,
**caractérisé en ce que**
l'unité de serrage (12) est conçue sous la forme d'un coulisseau profilé de serrage.
